# EUROPEAN PATENT APPLICATION

(11) **EP 3 042 853 A1**
(43) Date of publication of application: **13.07.2016**
(21) Application number: 16150590.4
(22) Date of filing: 08.01.2016
(51) Int. Cl.: B64D 37/30, B64D 37/32, F25J 3/04, B64D 13/06

(54) **ON-BOARD AIRCRAFT OXYGEN ENRICHED AIR AND NITROGEN ENRICHED AIR GENERATION SYSTEM AND METHOD**

(30) Priority: 07.05.2015 IN 2330CH2015; 08.01.2015 IN 140CH2015
(71) Applicant: Airbus Group India Private Limited, Karnataka, Bangalore (IN)
(72) Inventor: Sharma, Anurag, 560048 Karnataka (IN)
(74) Representative: Ribeiro, James Michael

(57) **Abstract**

An on-board aircraft oxygen enriched air and nitrogen enriched air generation system and method are disclosed. In one embodiment, the system includes a first heat exchanger which is configured to receive pressurized air from a source of pressurized air. Further, the first heat exchanger cools the pressurized air to a temperature in the range of -120 °C to -70°C. Furthermore, a separation unit is configured and dimensioned to communicate with the first heat exchanger. The separation unit generates nitrogen enriched air and oxygen enriched air from the cooled air at the temperature range of -120 °C to -70°C.

## Description

### RELATED APPLICATIONS

Benefit is claimed to Foreign application Serial No. 140/CHE/2015 filed in India entitled "ON-BOARD AIRCRAFT NITROGEN ENRICHED AIR AND COOLING FLUID GENERATION SYSTEM AND METHOD", filed on January 08, 2015, by AIRBUS GROUP INDIA PRIVATE LIMITED, and 2330/CHE/2015 filed in India entitled "ON-BOARD AIRCRAFT OXYGEN ENRICHED AIR AND NITROGEN ENRICHED AIR GENERATION SYSTEM AND METHOD", filed on May 07, 2015, by AIRBUS GROUP INDIA PRIVATE LIMITED which is herein incorporated in its entirety by reference for all purposes.

### TECHNICAL FIELD

Embodiments of the present subject matter generally relate to generation of oxygen enriched air and nitrogen enriched air and more particularly, to an on-board aircraft combined oxygen enriched air and nitrogen enriched air generation system and method.

### BACKGROUND

Typically, in aircrafts, there is a need to provide an inert gas (e.g., nitrogen) for filling void space in fuel tanks, aircraft cargo bay and the like. For example, inert gas is provided to reduce flammability and also to maintain a required pressure in the fuel tanks. Also, there is a need to provide oxygen for aircraft crew and passengers to breathe and for other on-board systems that require oxygen. Conventional on-board oxygen generation systems and nitrogen generation systems respectively generate oxygen and nitrogen in the aircrafts using engine bleed air, cabin air and/or ram air. Further, the separate on-board nitrogen generation systems and on-board oxygen generation systems for respectively generating the nitrogen and oxygen may significantly add to weight and size of the aircraft. Furthermore, the oxygen and nitrogen are generated in gaseous form and may require significantly large storage containers to store the generated oxygen and nitrogen based on demand of on-board systems in the aircrafts.

### SUMMARY

An on-board aircraft combined oxygen and nitrogen enriched air generation system and method are disclosed. According to one aspect of the present subject matter, the system includes a first heat exchanger which is configured to receive pressurized air from a source of pressurized air. Further, the first heat exchanger cools the pressurized air to a temperature in the range of -120 °C to -70°C. Furthermore, a separation unit is configured and dimensioned to communicate with the first heat exchanger. The separation unit generates nitrogen enriched air and oxygen enriched air from the cooled air at the temperature range of -120 °C and -70°C.

In one example, the system includes a second heat exchanger coupled to the separation unit to liquefy at least a portion of the generated nitrogen enriched air by cooling the portion of the generated nitrogen enriched air to a temperature in the range of -210°C to -195°C and a nitrogen storage container to store the liquefied portion of the nitrogen enriched air. In another example, the system includes a third heat exchanger coupled to the separation unit to liquefy at least a portion of the generated oxygen enriched air by cooling the portion of the generated oxygen enriched air to a temperature in the range of -185°C to -178°C and an oxygen storage container to store the liquefied portion of the oxygen enriched air.

According to another aspect of the present subject matter, pressurized air is fed into a first heat exchanger to cool the pressurized air to a temperature in the range of - 120 °C to -70°C. Further, the cooled air at the temperature range of -120 °C and -70°C is fed into a separation unit. Furthermore, nitrogen enriched air and oxygen enriched air are generated from the cooled air. In one example, at least a portion of the generated nitrogen enriched air is liquefied by cooling the portion of the generated nitrogen enriched air to a temperature in the range of -210°C to -195°C in a second heat exchanger. The liquefied portion of the nitrogen enriched air is stored in a nitrogen storage container. In another example, at least a portion of the generated oxygen enriched air is liquefied by cooling the portion of the generated oxygen enriched air to a temperature in the range of --185°C to -178°C in a third heat exchanger. The liquefied portion of the oxygen enriched air is stored in an oxygen storage container.

The system and method disclosed herein may be implemented in any means for achieving various aspects. Other features will be apparent from the accompanying drawings and from the detailed description that follow.

### BRIEF DESCRIPTION OF THE DRAWINGS

Various embodiments are described herein with reference to the drawings, wherein:
**FIG. 1** illustrates an example on-board aircraft system for generating oxygen enriched air and nitrogen enriched air; and
**FIG. 2** is a flow diagram illustrating an example method for oxygen enriched air and nitrogen enriched air generation on-board the aircraft.
The drawings described herein are for illustration purposes only and are not intended to limit the scope of the present disclosure in any way.

### DETAILED DESCRIPTION

An on-board aircraft combined oxygen and nitrogen enriched air generation system and method are disclosed. In the following detailed description of the embodiments of the present subject matter, references are made to the accompanying drawings that form a part hereof, and in which are shown by way of illustration specific embodiments in which the present subject matter may be practiced. These embodiments are described in sufficient detail to enable those skilled in the art to practice the present subject matter, and it is to be understood that other embodiments may be utilized and that changes may be made without departing from the scope of the present subject matter. The following detailed description is, therefore, not to be taken in a limiting sense, and the scope of the present subject matter is defined by the appended claims.

Conventional on-board nitrogen generation systems and on-board oxygen generation systems respectfully generate nitrogen enriched air and oxygen enriched air. When the beds/hollow fibre cartridges of the on-board nitrogen generation systems and on-board oxygen generation systems are saturated, the nitrogen trapped in the bed is reverse purged to release and vent the nitrogen in case of the on-board oxygen generation systems and the oxygen trapped in the bed is reverse purged to release and vent the oxygen in case of the on-board nitrogen generation systems. Further, the separate on-board nitrogen generation systems and on-board oxygen generation systems for respectively generating the nitrogen enriched air and oxygen enriched air may significantly add to weight and size of the aircraft.

Further, the on-board nitrogen generation systems and on-board oxygen generation systems include a conditioning system for conditioning (e.g., reducing temperature, pressure and moisture) the engine bleed air before supplying to nitrogen/oxygen separation packs for generating the nitrogen enriched air or oxygen enriched air. This conditioning system may have weight implications on the aircraft.

Further, the on-board nitrogen generation systems and the on-board oxygen generation systems are generally over-sized due to significantly large demand variations during different phases of flight. For example, peak demands for nitrogen may occur during aircraft start-up, aircraft take-off, aircraft descent and the like and the aircraft may have minimum demand on operating time before pushback. Therefore, the on-board nitrogen generation systems may not be energy and weight optimized. Further, the nitrogen enriched air and the oxygen enriched air are generated in gaseous form and may require significantly large storage containers to store the generated nitrogen enriched air based on demand of on-board systems in the aircrafts.

The example technique disclosed herein proposes an on-board aircraft combined oxygen and nitrogen enriched air generation system and method. In one example, the system includes a first heat exchanger configured to receive pressurized air from a source of pressurized air. The first heat exchanger cools the pressurized air to a temperature in the range of -120 °C to -70°C. Further, the system includes a separation unit is configured and dimensioned to communicate with the first heat exchanger. The separation unit generates nitrogen enriched air and oxygen enriched air from the cooled air at the temperature range of -120 °C and -70°C. In one example, the system includes a second heat exchanger coupled to the separation unit to liquefy at least a portion of the generated nitrogen enriched air by cooling the portion of the generated nitrogen enriched air to a temperature in the range of -210°C to -195°C and a nitrogen storage container to store the liquefied portion of the nitrogen enriched air. In another example, the system includes a third heat exchanger coupled to the separation unit to liquefy at least a portion of the generated oxygen enriched air by cooling the portion of the generated oxygen enriched air to a temperature in the range of -185°C to -178°C and an oxygen storage container to store the liquefied portion of the oxygen enriched air.

This technique eliminates the use of large storage system for storing nitrogen enriched air and oxygen enriched air in gaseous form. Therefore, the on-board aircraft combined oxygen and nitrogen enriched air generation system is weight and energy optimized.

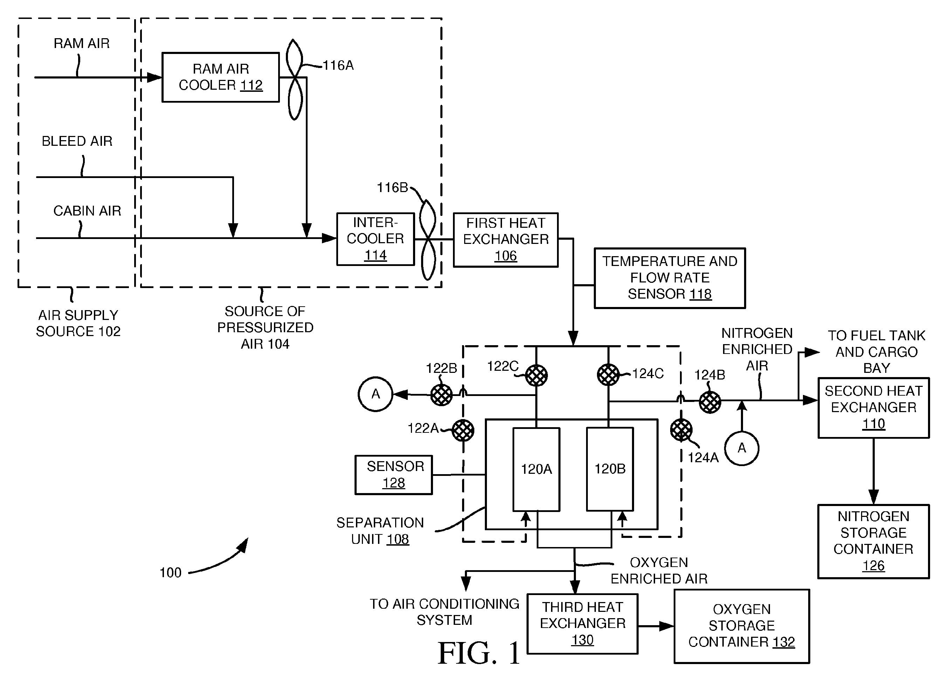

Referring now to **FIG. 1****,** which illustrates an exemplary on-board aircraft system 100 for generating oxygen enriched air and nitrogen enriched air, according to one embodiment. As shown in **FIG. 1****,** the on-board aircraft system 100 includes an air supply source 102, a source of pressurized air 104, a first heat exchanger 106, a separation unit 108 and a second heat exchanger 110. Further as shown in **FIG. 1****,** the source of pressurized air 104 is coupled between the air supply source 102 and the first heat exchanger 106. Furthermore as shown in **FIG. 1****,** the separation unit 108 is coupled between the first heat exchanger 106 and the second heat exchanger 110.

In the example illustrated in **FIG. 1****,** the air supply source 102 includes ram air, bleed air and/or cabin air. In one example, air conditioning system in an aircraft conditions (e.g., reduces temperature, pressure and moisture levels) engine bleed air and supplies the conditioned air to the source of pressurized air 104. Further, the cabin air refers to air obtained from aircraft cabin. Furthermore, ram air refers to airflow created by motion of the aircraft.

Further as shown in **FIG. 1****,** the source of pressurized air 104 includes a ram air cooler 112, an inter-cooler 114 and compressors 116 A and 116B (e.g., centrifugal /axial compressors that are driven by electric power). In addition as shown in **FIG. 1****,** the ram air cooler 112 is coupled to the inter-cooler 114 via the compressor 116A. In one embodiment, the air supply source 102 provides one or more of the ram air, the bleed air and the cabin air to the source of pressurized air 104. In one example, when the air supply source 102 provides ram air to the source of pressurized air 104, then the ram air cooler 112 cools the ram air which may be at a high temperature. Further, the compressor 116A compresses the cooled ram air to increase pressure of the cooled ram air. Furthermore, the inter-cooler 114 cools the pressurized ram air to further reduce the temperature. In another example, when the air supply source 102 provides bleed air and/or cabin air to the source of pressurized air 104, then the bleed air and/or cabin air is provided to the inter-cooler 114.

Further, the inter-cooler 114 cools the bleed air and the cabin air to further reduce the temperature. In addition, the compressor 116B compresses the pressurized ram air, the bleed air and/or the cabin air to generate pressurized air to supply to the first heat exchanger 106.

Further in operation, the first heat exchanger 106 receives the pressurized air from the source of pressurized air 104. For example, the first heat exchanger 106 can be a liquid helium heat exchanger, a neon heat exchanger and the like. Furthermore, the first heat exchanger 106 cools the pressurized air to a temperature in the range of - 120 °C to -70°C. For example, air cooling technique used in the first heat exchanger 106 is a reverse brayton cycle. The first heat exchanger 106 may also separate moisture from the pressurized air. The cooled air in the temperature range of -120 °C to -70°C is in a near liquid state. In another example, the first heat exchanger 106 may be bypassed when using the cabin air at inlet to a zeolite adsorbent bed separator which works at normal temperature. In this case, only moisture removal is required before reutilizing the cabin outlet air.

In addition in operation, a temperature and flow rate sensor 118 determines temperature and flow rate of the cooled air generated by the first heat exchanger 106. In one example, if it is determined that the temperature of the cooled air is not within the range of -120 °C to -70°C the operation of the first heat exchanger 106 may be modified suitably, such that the temperature of the cooled air falls within the range. Similarly, if it is determined that the flow rate of the cooled air is not within the desired limit, the operation of the first heat exchanger 106 may be modified suitably.

Moreover in operation, the cooled air is fed to the separation unit 108. In the example illustrated in **FIG. 1**, the separation unit 108 includes separation membranes 120A and 120B. Exemplary separation membranes include low temperature ceramic separation zirconium dioxide membranes, hollow fibre zeolite adsorbent membranes, gas chromatographic separation membranes, perovskite separation membranes and the like. In one example, one of the separation membranes 120A and 120B binds oxygen and lets nitrogen pass to generate nitrogen enriched air when the cooled air is passed in one direction while the other separation membrane generates the oxygen enriched air by releasing the oxygen when cooled air is passed in the opposite direction.

In a first operating state, a control valve 122A is open and control valve 124A is closed so that the cooled air generated by the first heat exchanger 106 passes through the separation membrane 120A. Further, control valve 124B is closed, control valve 122B is open and control valve 122C is closed. In this operating state, the separation membrane 120A binds oxygen and lets the nitrogen pass to generate nitrogen enriched air. Also, control valve 122B is open so that the generated nitrogen enriched air is sent to fuel tank and cargo bay and/or the second heat exchanger 110. Furthermore, control valve 124C is open so that cooled air passes through the separation membrane 120B in the reverse direction. The separation membrane 120B uses the cooled air to release oxygen adsorbed in the previous cycle to generate oxygen enriched air. Furthermore, the generated oxygen enriched air is sent to air conditioning system and/or to the third heat exchanger 130.

Further in the first operating state, a sensor 128 coupled to the separation unit 108 measures oxygen content in the generated nitrogen enriched air. Further, when the said oxygen content coming from the separation membrane 120A raises above a predetermined threshold value, reverses operation of the separation membranes 120A and 120B to a second operating state. In an example, when the separation membrane 120A is saturated with the adsorbed oxygen, capability of the separation membrane 120A to bind oxygen will decrease. As a result, the content of oxygen in the nitrogen enriched air will increase and therefore content of nitrogen in the nitrogen enriched air will drop. Therefore, the operation of the separation membranes 120A and 120B are reversed to the second operating state to release the binded oxygen in the separation membrane 120A.

In the second operating state, the control valve 122A is closed and control valve 124A is open so that the cooled air passes through the separation membrane 120B. Further, control valve 122B is closed, control valve 124B is open and the control valve 124C is closed. In this operating state, the separation membrane 120B binds oxygen and lets the nitrogen pass to generate nitrogen enriched air. Also, control valve 124B is open so that generated nitrogen enriched air is sent to fuel tank and cargo bay and/or the second heat exchanger 110. Furthermore, control valve 122C is open so that cooled air passes through the separation membrane 120A in reverse direction. The separation membrane 120A uses the cooled air to release oxygen adsorbed in the previous cycle (i.e., in the first operating state) to generate oxygen enriched air. Furthermore, the generated oxygen enriched air is sent to air conditioning system and/or to the third heat exchanger 130.

Further in the first and second operating states, a portion of the generated nitrogen enriched air is sent to the second heat exchanger 110. For example, the second heat exchanger 110 is a liquid helium heat exchanger, a neon heat exchanger and the like. The second heat exchanger 110 liquefies the portion of the nitrogen enriched air by cooling the portion of the nitrogen enriched air to a temperature in the range of -210°C to -195°C. The liquefied portion of the nitrogen enriched air is then stored in nitrogen storage container 126. Exemplary nitrogen storage container includes light weight cryogenic storage containers. The liquefied nitrogen may be used for cooling needs in the aircraft, such as avionic cooling, carbon brake disc cooling, secondary cooling system (SES) and the like.

Furthermore, the remaining portion of the generated nitrogen enriched air is utilized in fuel tanks, cargo bay and the like to reduce flammability. The nitrogen enriched air may also be used in the fuel tanks to maintain a predetermined pressure.

Also in the first and second operating states, a portion of the generated oxygen enriched air is sent to the third heat exchanger 130. For example, the third heat exchanger 130 is a liquid helium heat exchanger, a neon heat exchanger and the like. The third heat exchanger 130 liquefies the portion of the oxygen enriched air by cooling the portion of the oxygen enriched air to a temperature in the range of -185°C to -178°C. The liquefied portion of the oxygen enriched air is then stored in oxygen storage container 132. Exemplary oxygen storage container includes light weight cryogenic storage containers. The liquefied oxygen may be used in case of emergency situations/descents due to depressurisation/hole in fuselage/hull loss and the like.

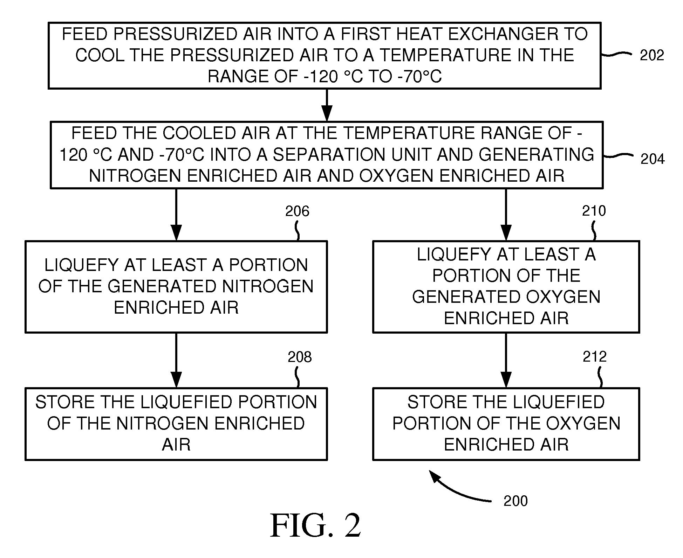

Referring now to **FIG. 2****,** which is a flow diagram 200 illustrating an exemplary method for generating oxygen enriched air and nitrogen enriched air on-board an aircraft, according to one embodiment. At block 202, pressurized air is fed into a first heat exchanger to cool the pressurized air to a temperature in the range of about -120 °C to -70°C. Exemplary first heat exchanger includes a liquid helium heat exchanger, a neon heat exchanger and the like. In one example, the pressurized air is generated from air supplied from an air supply source. The air supply source includes any one or combination of cabin air, bleed air, ram air and the like.

At block 204, nitrogen enriched air and oxygen enriched air are generated from the cooled air by feeding the cooled air at the temperature range of about -120 °C and - 70°C into a separation unit. In one example, the separation unit includes at least two separation membranes. Exemplary separation membranes include low temperature ceramic separation zirconium dioxide membranes, hollow fibre zeolite adsorbent membranes, gas chromatographic separation membranes, perovskite separation membranes and the like.

In one embodiment, oxygen is binded and nitrogen is let to pass in one of the at least two separation membranes to generate nitrogen enriched air, while the oxygen enriched air is generated by releasing binded oxygen in other separation membrane of the at least two separation membranes using the cooled air. Further, oxygen content is measured in the generated nitrogen enriched air using a sensor. Furthermore, operation of the at least two separation membranes is reversed when said oxygen content in the generated nitrogen enriched air raises above a predetermined threshold value.

In an alternate embodiment, in certain scenarios/operating conditions, the separation membranes can bind nitrogen and lets the oxygen pass to generate oxygen enriched air and then release the binded nitrogen by reversing the flow of cooled air. For example, nitrogen can be binded and oxygen can let to pass in one of the at least two separation membranes to generate oxygen enriched air, while the nitrogen enriched air is generated by releasing binded nitrogen in other separation membrane of the at least two separation membranes using the cooled air. In this case, the sensor may measure oxygen content in the generated oxygen enriched air and when said oxygen content drops below a predetermined threshold value, reverses operation of the at least two separation membranes.

At block 206, at least a portion of the generated nitrogen enriched air is liquefied by cooling the portion of the generated nitrogen enriched air to a temperature in the range of about -210°C to -195°C in a second heat exchanger. Exemplary second heat exchanger includes a liquid helium heat exchanger, a neon heat exchanger and the like. At block 208, the liquefied portion of the nitrogen enriched air is stored in a nitrogen storage container.

At block 210, at least a portion of the generated oxygen enriched air is liquefied by cooling the portion of the generated oxygen enriched air to a temperature in the range of about --185°C to -178°C in a third heat exchanger. Exemplary third heat exchanger includes a liquid helium heat exchanger, a neon heat exchanger and the like. At block 212, the liquefied portion of the oxygen enriched air is stored in an oxygen storage container.

In the above-described example system and method, the atmospheric air can be drawn into a ram air inlet compressor with intercooler and pre-cooler integrated into ram air dust and supplied at a few bar pressure and low temperature to the combined cycle pack (i.e., combined oxygen and nitrogen enriched air generation system). An additional electrically driven compressor with intercoolers is used in case higher pressure is required. The combined cycle packs supply both oxygen enriched air (e.g., 95-99.9% oxygen) and/or liquid oxygen and nitrogen enriched air (90-99% nitrogen) and/or liquid ntrogen.

The oxygen enriched air is mixed with cabin air and supplied to passengers in cabin for pressurization and breathing resulting in a composition of oxygen higher than the normal percentage (i.e., 21 %) of oxygen in air (say 50-70%). This may increase the partial pressure of oxygen available to the lung alveoli resulting in sufficient oxyhaemoglobin concentration (e.g., 90%) throughout the flight phases, even though the cabin pressure may be at about 7000-14000 feet, giving an equivalent breathing altitude of about 3000-6000 feet. This principle may be similar to breathing oxygen thru a mask in unpressurised aircraft at altitudes up to about 25000 feet. This may also give a higher level of passive protection to the occupants even in a decompression scenario (e.g., structural pressure loss/hole in hull) if either the combined separation pack or stored liquid oxygen is available.

The lower pressure in the fuselage may lead to less differential magnitude with the outside air reducing the cyclic pressurisation fatigue load which results in lower aircraft skin and structural thickness required to tolerate the internal pressure. This may significantly reduces the airframe weight and results in a lighter aircraft and may also reduce chances of hull rupture because of the reduced differential pressure. Since the air-conditioning mix is richer in oxygen, it also has lower total mass flow requirements than conventional systems reducing the size of the air conditioning packs and also the diameter of the air distribution system pipelines. This may result in size and weight savings in the air conditioning system and cabin air distribution system in the aircraft.

The off peak generation of oxygen is stored in a cryogenic reservoir from where it can be used in case of emergency/descent due to depressurisation/hull loss. This reduces/replaces the number of emergency oxygen bottles and also eliminates the need for ground charging and inspection of nitrogen/inert gas generation systems for fuel tanks, cargo and the like.

Further, the generated nitrogen may be supplied to the inert system which pressurises the fuel tanks with inert gas and also floods the cargo with inert gas in case of smoke detection. This combined cycle thus saves or reduces the weight of a separate nitrogen or inert gas generation or storage system reducing the weight of the aircraft.

The combined oxygen enriched air and nitrogen enriched air generation system for aircraft air-conditioning and fuel tank pressurisation may enable using a lesser cabin pressure (e.g., higher cabin pressure altitude than existing using atmospheric air with 21% oxygen) while achieving structural weight reduction due to lower differential pressure with the outside atmosphere. This system may also keep the same or higher level of protection from Hypoxia by delivering a higher percentage of oxygen and hence higher partial pressure of oxygen to the occupants of the aircraft despite lower cabin total pressure protecting them from the adverse effects of altitude.

The off peak oxygen from the combined oxygen enriched air and nitrogen enriched air generation system is stored in cryogenic Low pressure reservoirs for use in emergency situations/descents (e.g., depressurisation/hole in fuselage). This may eliminate or reduce the size of the traditional emergency oxygen stored supply and also eliminate the need for frequent ground charging and inspection of the emergency oxygen system. The low temperature nitrogen from combined cycle is used for avionics/brake, secondary cooling systems and other cooling needs.

In various embodiments, the example technique described in FIGS. 1 through 2 proposes a combined oxygen and nitrogen enriched air generation system and method. Further, ram air can be used instead of engine bleed air in bleedless aircrafts. Furthermore, the liquid nitrogen is safer compared to bottled nitrogen in explosive situations due to much lower pressures and volumes. The weight of the liquid nitrogen/oxygen is lesser compared to high pressure bottled nitrogen gas/oxygen. In addition, availability of liquid nitrogen can provide a liquid cooling capability for advanced electronics as well as low temperature environments that would enable high efficiency alternators and motors along with other superconductor benefits giving significant weight and size benefits.

The above-described example combined oxygen and nitrogen enriched air generation system utilizes the side/purge products of air separation beds. The above-described system and method use enriched cabin atmosphere to provide hypoxia protection without increasing pressurisation load on airframe and facilitates reduced rate of descent in case of pressurisation loss. The above-described system and method may also facilitates maintaining higher flight holding altitude/diversion time after hull loss leading to less stresses on airframe and lower dive acceleration and stabilisation of altitudes above 10000 feet due to greater hypoxia protection. The above-described system and method may facilitate reduction in flow rate and size, weight of air-conditioning packs and distribution ducting weights. The above-described system and method may also facilitate reduction in outflow of air from cabin and lesser energy requirements for air conditioning and circulation system. The above-described system and method may provide equivalent partial pressure of oxygen (PPO2) altitude of about 5000 feet with actual cabin altitude of about 8000-14000 feet leading to less pressure load hence lower pressure difference on airframe with ambient at max altitude. The above-described system and method may increase in fatigue life of air conditioning system (e.g., longer airframe life) due to lower fatigue pressurization load amplitude.

The above-described system and method may eliminate current ozone removal system by utilizing ceramic molecular sieve integrated into the combined separation system. The above-described system and method may also facilitate residual moisture entrapment by utilizing scrubbing/adsorbent systems. Further, availability of cryogenic liquids on an aircraft may enable development or deployment of technologies on commercial jet aircraft. Availability of sufficient liquid oxygen at appropriate times could permit deployment of efficient, lightweight auxiliary power unit/fuel cell. Also, availability of liquid nitrogen can provide a liquid cooling capability for advanced electronics as well as low temperature environments that would enable high efficiency alternators and motors along with other superconductor benefits.

Although certain methods, systems, apparatus, and articles of manufacture have been described herein, the scope of coverage of this patent is not limited thereto. To the contrary, this patent covers all methods, apparatus, and articles of manufacture fairly falling within the scope of the appended claims either literally or under the doctrine of equivalents.

## Claims

1. An on-board aircraft system, comprising:
a first heat exchanger configured to receive pressurized air from a source of pressurized air, wherein the first heat exchanger cools the pressurized air to a temperature in the range of -120 °C to -70°C; and
a separation unit configured and dimensioned to communicate with the first heat exchanger and to generate nitrogen enriched air and oxygen enriched air from the cooled air at the temperature range of -120 °C to -70°C.

2. The system of claim 1, further comprising:
a second heat exchanger coupled to the separation unit to liquefy at least a portion of the generated nitrogen enriched air by cooling the portion of the generated nitrogen enriched air to a temperature in the range of -210°C to -195°C; and
a nitrogen storage container to store the liquefied portion of the nitrogen enriched air.

3. The system of claim 2, further comprising:
a third heat exchanger coupled to the separation unit to liquefy at least a portion of the generated oxygen enriched air by cooling the portion of the generated oxygen enriched air to a temperature in the range of -185°C to -178°C; and
an oxygen storage container to store the liquefied portion of the oxygen enriched air.

4. The system of claim 3, wherein the first heat exchanger, the second heat exchanger and the third heat exchanger comprise one of a liquid helium heat exchanger and a neon heat exchanger.

5. The system of claim 1, wherein the source of pressurized air is disposed between the first heat exchanger and an air supply source to generate the pressurized air from air supplied from the air supply source, wherein the air supply source is selected from the group consisting of cabin air, bleed air and ram air.

6. The system of claim 1, wherein the separation unit comprises at least two separation membranes, wherein one of the at least two separation membranes binds oxygen and lets nitrogen pass to generate the nitrogen enriched air, while the other separation membrane of the at least two separation membranes releases oxygen to generate the oxygen enriched air using the cooled air.

7. The system of claim 6, further comprising:
a sensor coupled to the separation unit, wherein the sensor measures oxygen content in the generated nitrogen enriched air and when said oxygen content raises above a predetermined threshold value, reverses operation of the at least two separation membranes.

8. The system of claim 6, wherein the at least two separation membranes comprise one of low temperature ceramic separation zirconium dioxide membranes, hollow fibre zeolite adsorbent membranes, gas chromatographic separation membranes and perovskite separation membranes.

9. A method for on-board generation of nitrogen enriched air and oxygen enriched air in an aircraft, comprising:
feeding pressurized air into a first heat exchanger to cool the pressurized air to a temperature in the range of -120 °C to -70°C; and
feeding the cooled air at the temperature range of -120 °C to -70°C into a separation unit and generating nitrogen enriched air and oxygen enriched air from the cooled air.

10. The method of claim 9, further comprising:
liquefying at least a portion of the generated nitrogen enriched air by cooling the portion of the generated nitrogen enriched air to a temperature in the range of -210°C to -195°C in a second heat exchanger; and
storing the liquefied portion of the nitrogen enriched air in a nitrogen storage container.

11. The method of claim 10, wherein the first heat exchanger and the second heat exchanger comprise one of a liquid helium heat exchanger and a neon heat exchanger, and wherein the third heat exchanger comprises one of a liquid helium heat exchanger and a neon heat exchanger.

12. The method of claim 9, further comprising:
liquefying at least a portion of the generated oxygen enriched air by cooling the portion of the generated oxygen enriched air to a temperature in the range of -185°C to -178°C in a third heat exchanger; and
storing the liquefied portion of the oxygen enriched air in an oxygen storage container.

13. The method of claim 9, wherein the pressurized air is generated from air supplied from an air supply source, and wherein the air supply source is selected from the group consisting of cabin air, bleed air and ram air, and wherein the separation unit comprises at least two separation membranes.

14. The method of claim 13, wherein generating the nitrogen enriched air and the oxygen enriched air from the cooled air comprises:
binding oxygen and letting nitrogen pass in one of the at least two separation membranes to generate the nitrogen enriched air, while generating the oxygen enriched air by releasing oxygen in other separation membrane of the at least two separation membranes using the cooled air.

15. The method of claim 14, further comprising:
measuring oxygen content in the generated nitrogen enriched air using a sensor and reversing operation of the at least two separation membranes when said oxygen content raises above a predetermined threshold value.

16. The method of claim 13, wherein the at least two separation membranes comprise one of low temperature ceramic separation zirconium dioxide membranes, hollow fibre zeolite adsorbent membranes, gas chromatographic separation membranes and perovskite separation membranes.
